# EUROPEAN PATENT SPECIFICATION

(11) **EP 0 569 073 B1**
(45) Date of publication and mention of the grant of the patent: **06.03.1996**
(21) Application number: 93201104.2
(22) Date of filing: 16.04.1993
(51) Int. Cl.: B65G 13/07, B65G 47/54

(54) **A conveyor**
Förderer
Convoyeur

(30) Priority: 08.05.1992 NL 9200819
(43) Date of publication of application: 10.11.1993
(73) Proprietor: VANDERLANDE INDUSTRIES NEDERLAND B.V., NL-5460 AA Veghel (NL)
(72) Inventor: van den Goor, Jakobus Marie, NL-5674 SH Nuenen (NL)
(74) Representative: Vollebregt, Cornelis Jacobus, Ir.

(56) References cited:
- EP-A- 0 287 171

## Description

The invention relates to a conveyor provided with a frame and with two rollers journalled in said frame and being supported near their ends, which are rotatable about axes of rotation extending at least substantially parallel to each other, whilst pulleys provided near the ends of said rollers are connected to a common driving shaft for the rollers via a belt transmission.

Conveyors frequently comprise a construction in which a few at least substantially parallel rollers are driven from a common driving shaft by means of belts. Usually each roller is thereby coupled to the driving shaft by means of its own belt.

A problem that arises thereby is that when the belt is worn or broken the support of the roller near the end of the roller provided with a pulley, and possibly also the support near one end of the driving shaft, must be removed in order to be able to fit the belt on the pulley and the driving shaft again.

This is a difficult and time-consuming activity, whilst the conveyor needs to be put out of commission during these activities. This entails difficulties, in particular with conveyors comprising several pairs of rollers of this type.

The object of the invention is to obtain a conveyor of the above kind, wherein a driving belt can be replaced quickly and readily.

According to the invention this can be achieved in that the belt transmission comprises an endless belt, which is passed over the pulleys mounted on the ends of said rollers and also over two further pulleys, one of said further pulleys being mounted on the driving shaft and the other being freely rotatable about the central axis of the driving shaft, whilst the end of each roller provided with a pulley is supported by a supporting member, which is located at the side of the pulley secured to the roller remote from the roller in question, said supporting member being secured to the frame by means of an arm, which extends between the belt parts that extend from the pulley in question in the direction of the driving shaft.

By using the construction according to the invention an endless belt may be placed along the pulleys disposed near the driving shaft, and then be hitched over the pulleys secured to the ends of the rollers in question, whilst it will not be necessary to remove the supporting members of the rollers and/or the driving shaft.

The invention will be explained in more detail hereafter with reference to a possible embodiment of the construction according to the invention diagrammatically illustrated in the accompanying Figures.

Figure 1 is a cross-sectional view of a conveyor according to the invention.

Figure 2 is a larger-scale side elevation of a part of the conveyor shown in Figure 1.

Figure 3 is a larger scale view of Figure 2, seen according to the arrow III in Figure 2.

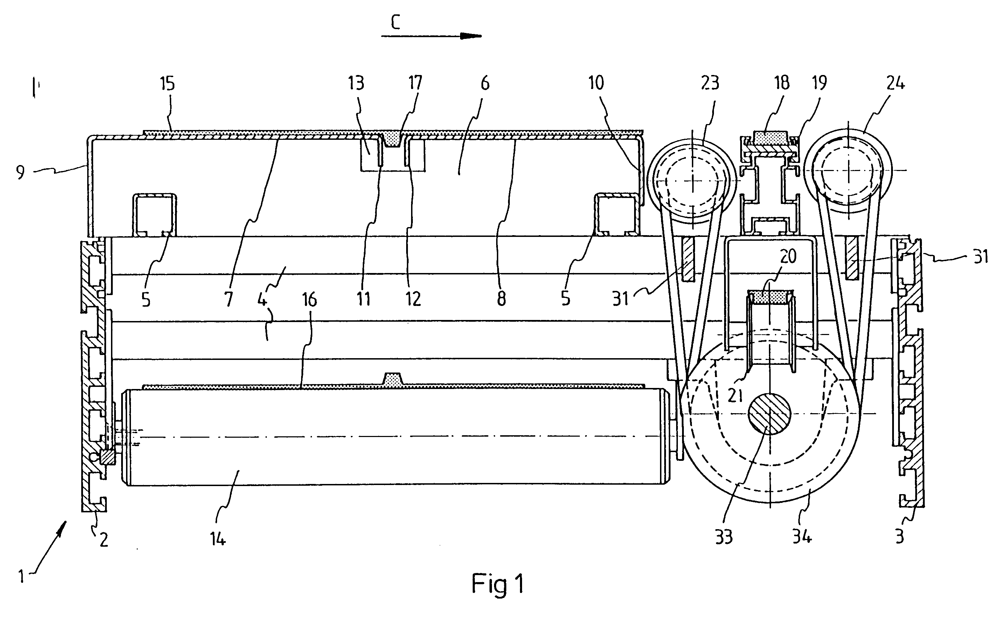

The conveyor shown in Figure 1 comprises a frame 1 provided with two longitudinal girders 2 and 3, which are interconnected by cross beams 4. The upper cross beams 4 support longitudinal girders 5, which support, by means of vertical plates 6 extending perpendicularly to the longitu- dinal direction of the conveyor, two coplanar plates 7 and 8 extending in the longitudinal direction of the conveyor. The ends 9 and 10 respec- tively of the plates 7 and 8 remote from each other are bent down at right angles, and fixed to the plates 6.

The facing ends 11 and 12 are likewise bent down at right angles and extend some distance apart from each other. Recesses 13 are provided in the plates 6 for receiving the bent-over ends 11 and 12.

Regularly spaced-apart rollers 14 extending perpendicularly to the longitudinal direction of the conveyor, seen in the longitudinal direction of the conveyor, are provided under the lower frame beams 4, said rollers being journalled in the frame so as to be freely rotatable about their longitudinal axis.

The conveyor is provided with an endless conveyor belt, whose upper part 15 is supported on the upper surface of the plates 7 and 8, as shown in Figure 1, whilst the lower part 16 of said conveyor belt is supported by the rollers 14.

As will furthermore be apparent from Figure 1 the conveyor belt is provided with a projecting nose 17, which is guided by the bent-over edges 11 and 12 of the plates 7 and 8 so as to prevent displacement of the conveyor belt transversely to its longitudinal direction.

A narrow conveyor belt is disposed at some distance from the conveyor belt 15, 16, the upper part 18 of said conveyor belt being guided by a guide section 19 secured to the frame, which extends parallel to the conveyor belt 15, 16, whilst the lower part 20 of said narrow conveyor belt is supported by a plurality of wheels 21 provided with projecting flanges, which are journalled in the frame, said wheels being journal led in the frame so as to be freely rotatable about axes of rotation extending perpendicularly to the longitudinal direction of the conveyor.

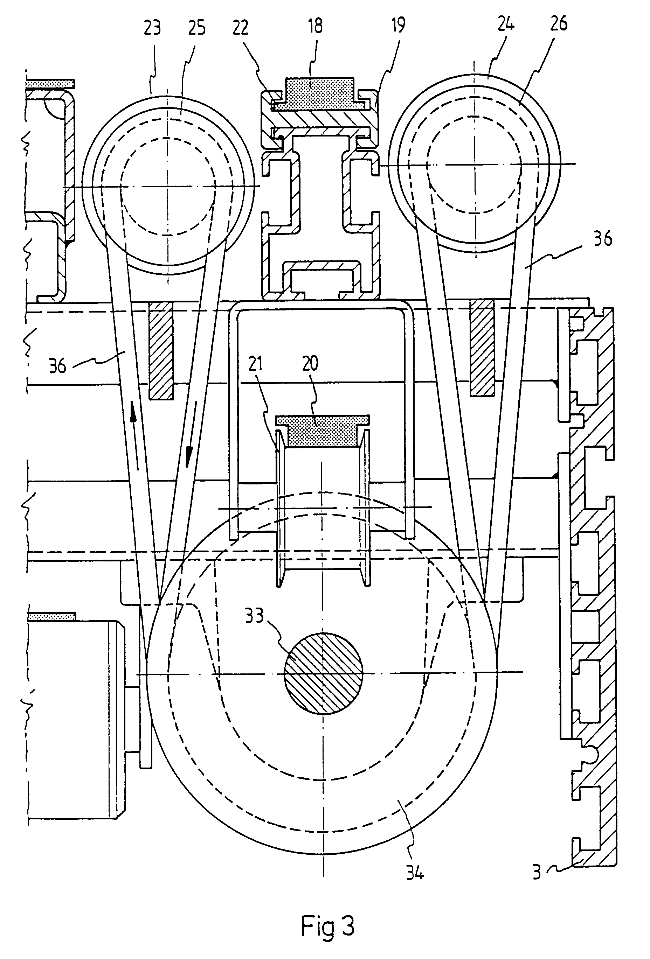

As is apparent from Figure 3 the narrow conveyor belt 18 has two projecting noses 22, which are accommodated in corresponding grooves provided in the section 19 so as to ensure an adequate guiding of the conveyor belt 18, 20 during operation. As will furthermore be apparent the upper surface of the upper part 15 of the wide conveyor belt 15, 16 lies substantially in one plane with the upper surface of the upper part 18 of the conveyor belt 18, 20.

Two rollers 23 and 24 are provided on either side of the upper part 18 of the conveyor belt 18, 20, said rollers being rotatable about axes of rotation extending at least substantially in the longitudinal direction of the conveyor.

Pulleys 25 and 26 are secured to the ends of the rollers 23 and 24 respectively.

The end of each roller provided with a pulley is rotatably supported by a pin 27, which is pivotally coupled to a vertical threaded rod 29 by means of a universal joint 28, said threaded rod 29 being screwed into a sleeve 30 with its bottom end. The sleeve 30 is secured to the frame 1 by means of an arm 31 extending from said sleeve to below the end of the roller provided with a pulley.

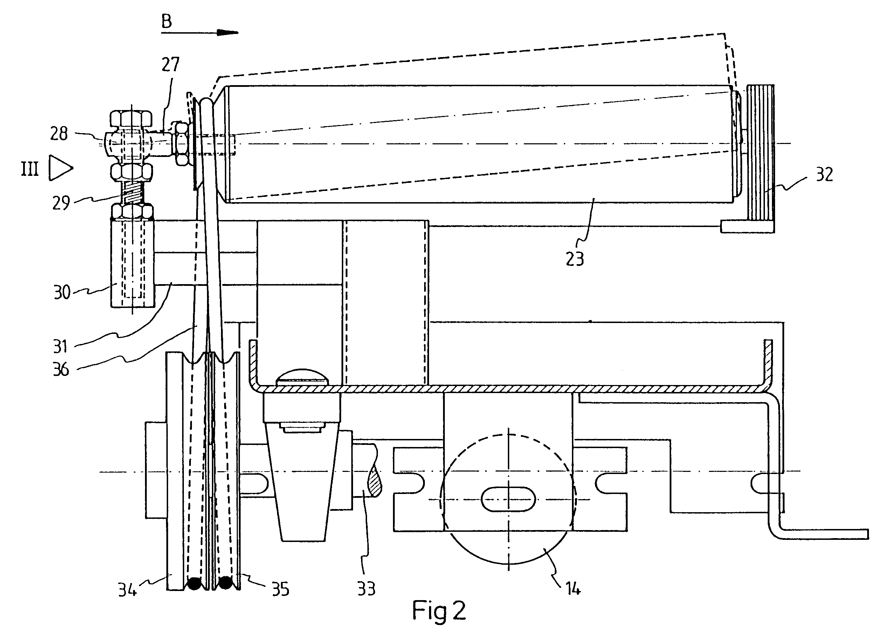

The end of the roller directed away from the supporting member 28 - 30 supporting the roller at one end is journal led in a further sup- porting member 32, which is capable of upward and downward movement by adjusting means (not shown), so that each roller can be adjusted between the position shown in full lines in Figure 2 and the position shown in dotted lines in Figure 2, for a purpose yet to be explained.

Usually the conveyor comprises several pairs of rollers 23, 24 of this type, which are arranged some distance apart, seen in the longitu- dinal direction of the conveyor.

For driving said pairs of rollers a driving shaft 33 extending in the longitudinal direction of the conveyor is journalled in the frame. Near each group of rollers 23, 24 two pulleys 34 and 35 are mounted on the driving shaft in side-by-side relationship, one of said pulleys being fixed to the driving shaft 33 and thus rotating along with the driving shaft during operation, the other being freely rotatable about the driving shaft.

As is shown in the Figures the two rollers 23 and 24 can be driven from the driving shaft 33 by means of a single belt or rope 36, wherefor said belt or rope 36 is passed over the two pulleys 34 in the manner shown in the figures, and also over the two pulleys 25 and 26 secured to the rollers 23 and 24.

By using the above-described construction it is possible to fit the belt or rope 36 in a very simple manner, since the belt can be placed on the two pulleys 34 and 35 from below, seen in Figure 1, whilst the parts of the endless belt or rope 36, each comprising two sections, which extend upwards on either side of the pulleys 34 and 35, can be hitched over the pulleys 25 and 26. This has been made possible by the fact that the supporting member 28 - 30 supporting the end of the roller provided with a pulley is secured to the frame in the above-described manner by means of the arm 31 extending from said supporting member, whereby the two parts extending towards a pulley 25 or 26 coupled to a roller 23 or 24 on either side of the supporting member 28 - 30 and the arm 31 can be moved into position on the respective pulley.

It will be apparent that in this manner a quick and ready fitting of the belt or rope 36 can be realized, without having to remove any part of the conveyor thereby.

During operation objects to be moved by means of the conveyor will be moved perpendicularly to the plane of the drawing, seen in Figure 1.

When the rollers occupy the lower most position shown in full lines in Figure 2 they will not project from the upper surface of the conveyor belts 15, 16 and 18, 20, so that the objects moved by means of said conveyor belts can move along without impediment. If it is necessary, however, to discharge an object sideways from the conveyor at a certain point, the rollers 23 and 24 will be adjusted into the position shown in dotted lines in Figure 2, so that an object arriving in the direction according to the arrow B will be slightly lifted, as it were, with its right-hand side, seen in Figure 1, and be discharged in the direction according to arrow C (Figure 1) by means of the driven rollers.

Surprisingly it has become apparent thereby, that also if the conveyor belt 18, 20 comprises a very small width in comparison with the width of the conveyor belt 15, 16, a quick and effective discharge of the objects moved by means of the conveyor belt 15, 16 and 18, 20 in the direction of arrow C can still be achieved, also if the width of the objects is such that said objects rest on the upper part 15 of the conveyor belt 15, 16 for the greater part.

In the illustrated embodiment the operative width of the conveyor belt 18, 20 is only ± 1/16th of the width of the conveyor belt 15, 16.

## Claims

1. A conveyor provided with a frame (2-5) and with two rollers (23, 24) jour- nalled in said frame and being supported near their ends, which are rotatable about axes of rotation extending at least substantially parallel to each other, whilst pulleys (25, 26) provided near the ends of said rollers are connected to a common driving shaft (33) for the rollers via a belt transmission (34-36), characterized in that said belt transmission comprises an endless belt (36), which is passed over the pulleys (25, 26) mounted on the ends of said rollers (23, 24) and also over two further pulleys (34, 35), one of said further pulleys being mounted on the driving shaft (33) and the other being freely rotatable about the central axis of the driving shaft, whilst the end of each roller provided with a pulley is supported by a supporting member (28-31), which is located at the side of the pulley secured to the roller remote from the roller in question, said supporting member being secured to the frame by means of an arm (31), which extends between the belt parts that extend from the pulley in question in the direction of the driving shaft.

2. A conveyor according to claim 1, characterized in that the two rollers extend at least substantially parallel to the longitudinal direction of the conveyor (1), being vertically adjustable from a position in which they are located under the transport surface of the conveyor to a position in which they at least partially project from the transport surface of the device.

3. A conveyor according to claim 1 or 2, characterized in that the two rollers are disposed on either side of a conveyor belt (18) extending in the longitudinal direction of the conveyor.

4. A conveyor according to any one of the preceding claims, characterized in that the conveyor rollers are disposed on either side of an upper part (18) of a conveyor belt (18, 20), whilst the combination of the two rollers and the conveyor belt are disposed beside a second conveyor belt (15, 16) extending parallel to said conveyor belt, the width of said second conveyor belt being more than ten times the width of the conveyor belt disposed between the two rollers.

## Patentansprüche

1. Förderer ausgestattet mit einem Rahmen (2-5) und zwei in dem Rahmen gelagerten und nahe ihrer Enden gehaltenen Rollen (23, 24), die um Drehachsen drehbar sind, die sich zumindest im wesentlichen parallel zueinander erstrecken, wobei nahe den Enden der Rollen vorgesehene Riemenscheiben (25, 26) mit einer für die Rollen gemeinsamen Antriebswelle (33) über einen Riementrieb (34-36) verbunden sind, dadurch gekennzeichnet, daß der Riementrieb einen Endlosriemen (36) umfaßt, der über die an den Enden der Rollen (23, 24) angebauten Riemenscheiben (25, 26) und ferner über zwei weitere Riemenscheiben (34, 35) läuft, von denen eine auf der Antriebswelle (33) montiert ist und die andere frei drehbar um die Mittelachse der Antriebswelle ist, während das mit einer Riemenscheibe versehene Ende jeder Rolle durch ein Stützelement (28-31) gehalten ist, welches an der Seite der an der Rolle befestigten Riemenscheibe gelegen ist, die von der betreffenden Rolle entfernt liegt, wobei das Stützelement an dem Rahmen mittels eines Arms (31) befestigt ist, der sich zwischen den Riementeilen erstreckt, welche sich von der betreffenden Riemenscheibe in Richtung der Antriebswelle erstrecken.

2. Förderer nach Anspruch 1, dadurch gekennzeichnet, daß sich die zwei Rollen zumindest im wesentlichen parallel zu der Längsrichtung des Förderers (1) erstrecken und vertikal von einer Stellung, in der sie sich unterhalb der Transportebene des Förderers befinden, in eine Stellung verstellbar sind, in der sie zumindest teilweise über die Transportebene der Vorrichtung hinausragen.

3. Förderer nach Anspruch 1 oder 2, dadurch gekennzeichnet, daß die zwei Rollen auf beiden Seiten eines Förderbandes (18) angeordnet sind, das sich in der Längsrichtung des Förderers erstreckt.

4. Förderer nach einem der vorangehenden Ansprüche, dadurch gekennzeichnet, daß die Fördererrollen auf beiden Seiten eines oberen Teils (18) eines Förderbandes (18, 20) angeordnet sind, während die Kombination der beiden Rollen und das Förderband neben einem zweiten Förderband (15, 16) angeordnet sind, das sich parallel zu dem genannten Förderband erstreckt, und die Breite des zweiten Förderbandes zehnmal größer ist als die Breite des zwischen den beiden Laufrollen angeordneten Förderbandes.

## Revendications

1. Convoyeur comprenant un châssis (2-5) et deux rouleaux (23,24) qui tourillonnent dans ledit châssis et sont supportés près de leurs extrémités, qui peuvent tourner autour d'axes de rotation au moins sensiblement mutuellement parallèles, tandis que des poulies (25,26) prévues près des extrémités desdits rouleaux sont connectées à un arbre d'entraînement commun (33) pour les rouleaux par l'intermédiaire d'une transmission à courroie (34-36), caractérisé en ce que ladite transmission à courroie comprend une courroie sans fin (36) qui passe sur les poulies (25,26) montées sur les extrémités desdits rouleaux (23,24) et également sur deux autres poulies (34,35), une desdites autres poulies étant montée sur l'arbre d'entraînement (33) et l'autre pouvant tourner librement autour de l'axe central de l'arbre d'entraînement, tandis que l'extrémité de chaque rouleau pourvue d'une poulie est supportée par un dispositif de support (28-31) qui est placé du côté de la poulie fixée au rouleau, à l'opposé du rouleau considéré, ledit dispositif de support étant fixé au châssis au moyen d'un bras (31) qui passe entre les brins de la courroie qui s'étendent,à partir de la poulie considérée, dans la direction de l'arbre d'entraînement.

2. Convoyeur suivant la revendication 1, caractérisé en ce que les deux rouleaux sont au moins sensiblement parallèles à la direction longitudinale du convoyeur (1) et ils sont verticalement réglables d'une position dans laquelle ils sont situés sous la surface de transport du convoyeur à une position dans laquelle ils font au moins partiellement saillie par rapport à la surface de transport du dispositif.

3. Convoyeur suivant la revendication 1 ou 2, caractérisé en ce que les deux rouleaux sont disposés de part et d'autre d'une bande transporteuse (18) s'étendant dans la direction longitudinale du convoyeur.

4. Convoyeur suivant une quelconque des revendications précédentes, caractérisé en ce que les rouleaux de convoyeur sont disposés de part et d'autre d'un brin supérieur (18) d'une bande transporteuse (18,20), tandis que la combinaison des deux rouleaux et de ladite bande transporteuse est disposée à côté d'une deuxième bande transporteuse (15,16) parallèle à ladite bande transporteuse, la largeur de ladite deuxième bande transporteuse étant plus de dix fois supérieure à la largeur de la bande transporteuse disposée entre les deux rouleaux.
